# EUROPEAN PATENT APPLICATION

(11) **EP 3 828 794 A1**
(43) Date of publication of application: **02.06.2021**
(21) Application number: 19211926.1
(22) Date of filing: 27.11.2019
(51) Int. Cl.: G06Q 10/10

(54) **EMAIL COLLABORATION**

(71) Applicant: Microsoft Technology Licensing, LLC, Redmond, WA 98052-6399 (US)
(72) Inventor: GHOSH, Kushal, Redmond, Washington 98052-6399 (US); KALU, Nikhil, Redmond, Washington 98052-6399 (US)
(74) Representative: Flint, Adam

(57) **Abstract**

A first user device (100a) of a first user (A) generates a collaboration object (200) having at least a draft collaborator field (202) for holding identifiers of collaborating users and a draft message field (201) for holding email content. In response to input from the first user (A), at least the draft collaborator field (202) is populated with an identifier of a second user (B). The collaboration object (200) is provided to enable the second user (B) to make modifications to one or more of the fields of the collaboration object (200) to generate a modified version of the collaboration object (200). The modified version of the collaboration object (200) is used to generate a final email (300). A collaborator field (302) of the final email (300) is populated with an identifier of the second user (B); and a message field (301) of the final email (300) is populated with email content as present in the draft message field (201) of the modified version of the collaboration object (200).

## Description

### Technical Field

The present disclosure relates to a method, computer program and user device for generating an email.

### Background

Many types of computing device are able to communicate with each other using emails. For example, an email may be written by a sending user at a first computing device and transmitted to a second user device where it may be read by a recipient user. Sending of the email may be over a network such as the Internet. Modern email systems may comprise one or more email servers allowing, for example, emails to be accepted, forwarded, delivered, etc. An email server may also store emails such that the recipient is able to access their received emails even when the sender is not connected to the network.

### Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

According to a first aspect disclosed herein, there is provided a method performed at a user device of a first user to generate a final email, the method comprising: generating a collaboration object having a plurality of fields comprising at least a draft collaborator field for holding identifiers of collaborating users and a draft message field for holding email content; in response to input from the first user, populating at least the draft collaborator field with an identifier of a second user; providing the collaboration object to enable the second user to make modifications to one or more of the fields of the collaboration object to generate a modified version of the collaboration object; and generating the final email based on the modified version of the collaboration object by: populating a collaborator field of the final email with an identifier of the second user; and populating a message field of the final email with email content as present in the draft message field of the modified version of the collaboration object.

According to a second aspect disclosed herein, there is provided a computer program comprising instructions such that when the computer program is executed on one or more computing devices, the one or more computing devices are arranged to carry out a method of generating a final email, the method comprising: generating a collaboration object having a plurality of fields comprising at least a draft collaborator field for holding identifiers of collaborating users and a draft message field for holding email content; in response to input from a first user, populating at least the draft collaborator field with an identifier of a second user; providing the collaboration object to enable the second user to make modifications to one or more of the fields of the collaboration object to generate a modified version of the collaboration object; and generating the final email based on the modified version of the collaboration object by: populating a collaborator field of the final email with an identifier of the second user; and populating a message field of the final email with email content as present in the draft message field of the modified version of the collaboration object.

There may be provided a non-transitory computer-readable storage medium storing a computer program as described above.

According to a third aspect disclosed herein, there is provided a user device comprising a processing system constructed and arranged to carry out a method of generating a final email, the method comprising: generating a collaboration object having a plurality of fields comprising at least a draft collaborator field for holding identifiers of collaborating users and a draft message field for holding email content; in response to input from a first user, populating at least the draft collaborator field with an identifier of a second user; providing the collaboration object to enable the second user to make modifications to one or more of the fields of the collaboration object to generate a modified version of the collaboration object; and generating the final email based on the modified version of the collaboration object by: populating a collaborator field of the final email with an identifier of the second user; and populating a message field of the final email with email content as present in the draft message field of the modified version of the collaboration object.

### Brief Description of the Drawings

To assist understanding of the present disclosure and to show how embodiments may be put into effect, reference is made by way of example to the accompanying drawings in which:
Figures 1a and 1b show schematically an example in which a collaboration object is used by two users to collaborate on an email; and
Figure 2a shows schematically a first example method of generating an email from a final collaboration object;
Figure 2b shows schematically a second example method of generating an email from a final collaboration object;
Figure 3 shows schematically an example displayed email;
Figure 4 shows schematically a third example method of generating an email from a final collaboration object;
Figure 5 shows schematically a fourth example method of generating an email from a final collaboration object;
Figure 6 shows schematically an example in which a collaboration object is used by three users to collaborate on an email;
Figure 7 shows schematically a fifth example method of generating an email from a final collaboration object; and
Figure 8 shows schematically an example method in accordance with an example described herein.

### Detailed Description

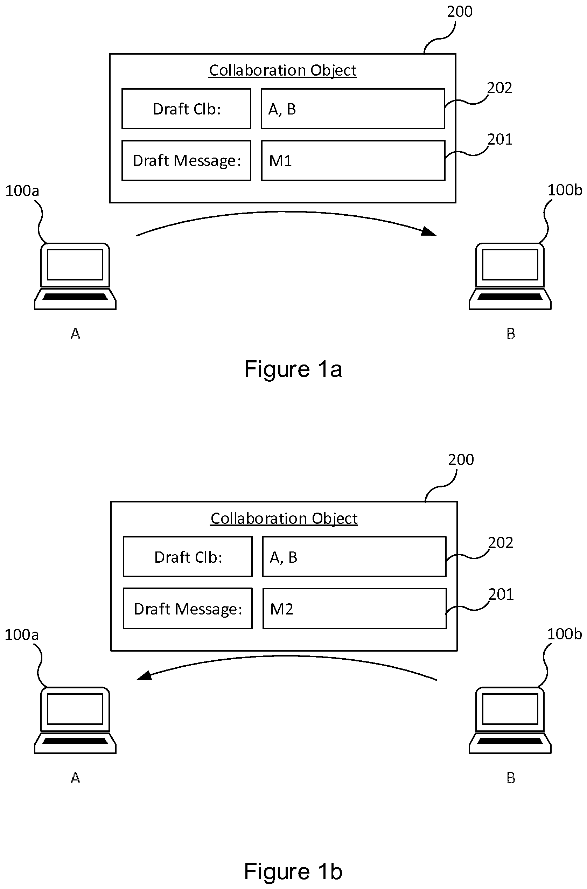

Figures 1a and 1b show schematically examples of a first user device 100a and a second user device 100b. The first user device 100a is operated by a first user A and the second user device 100b is operated by a second user B. The second user B may also be called a "collaborating user" or simply a "collaborator", for reasons which will become apparent. Furthermore, the collaborators may be called "mandatory" collaborators, to distinguish from "optional" collaborators, discussed later. In an example, the first user device 100a is being used to generate a final email for transmission to one or more user devices of other users.

In general, an email comprises two main parts: the message header and the message body. The message header has various fields indicating "metadata" of the email such as From, To, CC ("carbon copy"), BCC ("blind carbon copy"), Subject, Date, etc. The message body, on the other hand, is a field for holding the main content of the email. Modern email systems allow for the message body to hold not only text content, but other types of content such as images, hyperlinks, audio files, etc. It is understood that the names given to the various fields of the email are only labels. For example, the "To" field may be called a "Recipient" or "Recipients" field, or the like; the "CC" field maybe called a "Copied" field, or the like; the "BCC" field may be called a "Blind Copied" or "Secret Copied" field, or the like, etc.

In an example, recipients of an email may be categorised as follows:

Primary (or Principal) Recipients: these are recipients to whom the email is addressed. Email addresses (or other identifiers) of primary recipients are held in the To field. Each primary recipient receives a copy of the email when it is sent, and each primary recipient can see the identifiers of the other primary recipients and the secondary recipients.

Secondary Recipients: these are recipients who are "copied" on the email. Email addresses (or other identifiers) of secondary recipients are held in the CC field. Each secondary recipient receives a copy of the email when it is sent, and each secondary recipient can see the identifiers of the primary recipients and the other secondary recipients.

Tertiary Recipients: these are recipients who are "blind copied" on the email. Email addresses (or other identifiers) of tertiary recipients are held in the BCC field. Each tertiary recipient receives a copy of the email when it is sent, and each tertiary recipient can see the identifiers of the primary recipients and the secondary recipients. However, identifiers of tertiary recipients are not visible to any of the primary recipients, secondary recipients, or other tertiary recipients.

A sender may compose an email on their own by populating the message body field with a message intended to be read by a recipient. The sender then enters an email address (or other identifier) of at least one recipient into the To field of the message header. The sender may also populate one or more other fields such as the CC or BCC field or the subject field. Some fields may be populated automatically. For example, the From field may automatically indicate the sender, the date may be automatically input by the email system, etc. The sender can then cause the email to be sent to the one or more final recipients, usually by clicking a "send" button. In this context, "final recipients" refers to the set of primary and secondary and tertiary recipients (if any) specified in the respective fields at the time the email is sent.

Two or more users may collaborate on a draft email before it is sent to the final recipient(s) by one of the plurality of collaborators. In such cases, it is common for the other collaborators to be included in either the CC field of the final email. However, this does not give the recipient a clear context as to whether all the people indicated in the CC field (and the person indicated in the From field) actually provided input on the email message or not. This situation can be ambiguous for the recipient and can therefore make it difficult for the recipient to direct follow-up questions to the correct one or more users. For example, the recipient may wish to ask a technical question regarding the content of the email itself, or may wish to ask an administrative- or bureaucratic-type question. These types of questions are likely to be answerable by different ones of the users.

Referring again to Figures 1a and 1b, the first user device 100a and second user device 100b each comprise at least one user interface allowing the respective user to interact with the user device 100. For example, a user device 100 may comprise a graphical user interface for displaying graphical content to the user, a keyboard, mouse, etc. for allowing the user to provide user input to control the user device 100, a touchscreen allowing for both displaying of graphical content and the input of user input, etc. Examples of user devices include laptop computers, tablet computers, desktop computers, smartphones, etc. The first user device 100a and second user device 100b may be different types of device. In any case, the first user device 100a and second user device 100b are able to communicate with each other and other user devices via a network, such as one or more of the Internet, a local area network, a cellular network, etc., (not shown), via which emails and other data can be sent in accordance with known systems and methods.

Described below is a method allowing the first user A and the collaborating user B to collaborate on an email before a final version of the email is sent to one or more final recipients (not shown).

In this example, the first user A is instigating the preparation of the email with one or more other collaborating users, such as user B, and the user A may therefore be regarded as an instigating or lead user. To begin collaborating on an email with the collaborating user B, the first user A creates a "collaboration object" 200. The collaboration object 200 is a data structure which can be edited by the first user A and the collaborating user B using their respective user devices 100 as described below.

In some example, the collaboration object 200 may be sent between the first user device 100a and the second user device 100b. For example, the collaboration object 200 may be a logical entity which may be derived from an email whose message body or message header (or both) can be interpreted as a collaboration object 200. This is similar to the case of an email invite, where a "normal" email is sent with an attachment (e.g. "invite.ics") specifying that the email is to be treated as a meeting invite email. Hence, in some examples, the collaboration object 200 may itself be an email. The message body or header (or both) may be standardized for any email client (including web browsers).

In other examples, the collaboration object 200 may be implemented centrally, e.g. on a server. In such cases, the collaboration object 200 itself is not sent between the first user device 100a and the second user device 100b. Rather, the collaboration object 200 resides on a server which is accessible by both the first user device 100a and the second user device 100b for the first user A and second user B to make changes to the (central) collaboration object 200. The first user A may send (e.g. via email) an invite to the second user B inviting the second user B to make modifications to the collaboration object 200, e.g. by providing a network address of the server from which the collaboration object 200 can be accessed by the second user device 100b.

In some examples, the methods described herein may be implemented using email software installed on each user device 100. In other examples, the methods described herein may be implemented using an in-browser email software. In yet further examples, a combination of the two may be used, e.g. one or more of the user devices 100 may use email software installed on the user device 100 and one or more others of the user devices 100 may use in-browser email software. The email software need not be the same email software on each user device 100. Similarly, the in-browser email software need not be the same on each user device 100.

The collaboration object 200 comprises a plurality of fields. In this first example, the collaboration object 200 comprises a draft message field 201 and a draft collaborator field 202. More examples are given later below in which the collaboration object 200 comprises further fields.

The draft message field 201 is for holding email content. Email content may include text, images, hyperlinks, audio files, etc.

In an example, the draft collaborator field 202 is for holding identifiers of one or more collaborating users. For example, a collaborating user may be identified using their email address, names, or some other identifier. Identifiers of the collaborating users may be entered into the draft collaborator field 202.

The first user A operates the first user device 100a to populate at least the draft collaborator field 202 with an identifier of at least one other user with whom the first user A wishes to collaborate on an email. This may be done by the first user A providing user input at the first device 100a using, for example, a mouse, keyboard, voice input device, etc. In this example, the first user A has entered an identifier of the collaborating user B into the draft collaborator field 202. In this example the first user A is also a collaborator for the email, but has the special status of being the user who instigated the collaboration request. Therefore, the draft collaborator field 202 may comprise an identifier of all collaborating users, including the first user A. However, the collaboration object 200 may be rendered differently to different users on the respective user interfaces of the user devices 100. For example, when displaying the collaboration object 200 to a user, it is not necessary to display the identifier of the user to whom it is being displayed.

The first user A may also populate the draft message field 201 in a similar manner, or it may be left blank. In this example, the first user A has populated the draft message field 201 with content, such as a draft message "M1".

Once at least the draft collaborator field 202 has been populated with at least one identifier of a collaborating user B, the first user A can send the collaboration object 200. This may be done by the first user A clicking a "send" button on an interface of the first user device 100a. In this example, the collaboration object 200 is sent to one or more collaborating users indicated in the draft collaboration field 202 (other than the first user A). Sending of the collaboration object 200 may be performed by emailing the collaboration object 200 to the collaborating users.

The collaborating user B receives the collaboration object 200 and it is displayed on a user interface of the second user device 100b. The collaborating user B can then make changes to the values entered in the fields of the collaboration object 200 using the second user device 100b. For example, the collaborating user B may make modifications to the message in the draft message field 201, e.g. to add or remove text. The collaborating user B may also add or remove collaborators from the draft collaborator field 202. In this example, the collaborating user B has only modified the message M1 to produce a modified message "M2". That is, the collaboration object 200 now has M2 in the draft message field 201 (and still has A and B identified in the draft collaborator field 202).

Changes made by the second user B to the values in the fields of the collaboration object 200 may be indicated visually. That is, the second user device 100b may for example automatically mark the modifications made using "tracked changes" or similar so that the changes made can be easily seen.

Once the collaborating user B has finished editing the collaboration object 200, it is sent back to the first user device 100a. Again, this may be done by the collaborating user B clicking a "send" button on the user interface of the second user device 100b to cause the (now modified) collaboration object 200 to be transmitted to the first user device 100a. In general in this example, the collaboration object 200 is sent to all collaborators identified in the draft collaborator field 202.

The above describes a simple example in which the first user A and collaborating user B can work together to generate and modify a collaboration object 200. A single "round" of collaboration was shown, but it is understood that further rounds of collaboration could follow. That is, the first user A, after receiving an edited version of the collaboration object 200 from the collaborating user B, may make further changes to the values in one or more of the fields and send the collaboration object back to the collaborating user B as described above. The collaborating user B could then make more changes and so on. Eventually, however, the first user A will receive a version of the collaboration object 200 which is deemed by the first user A to be satisfactory. At this point, the collaboration object 200 may be referred to as a "final" collaboration object 200. For example, the first user A may "accept" all the tracked changes made to the collaboration object 200 by the second user B (and possibly also by user A).

The final collaboration object 200 is then used to generate a "final" email 300, as described below. The email is the "final" email 300 in the sense that it is the finished product which is sent out to the one or more final, ultimate recipients. In other words, the collaboration is performed as part of a separate "conversation" in which the collaboration object 200 is electronically passed around the collaborating users, who are all able to make changes until the collaboration object is in a state where at least the instigator (here, user A) is satisfied and optionally all the collaborating users are satisfied. Examples relating to determining approval of the collaborators are discussed later below.

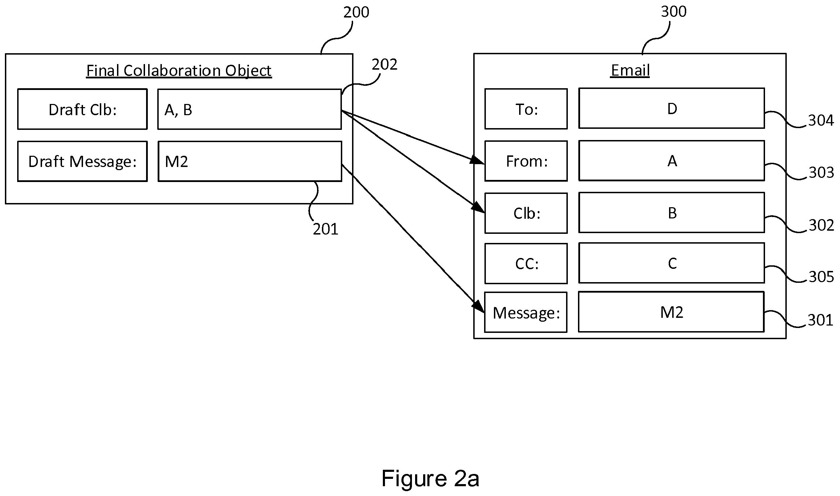

Figure 2a shows schematically an example method of generating a final email 300 from a final collaboration object 200. The final email 300 is generated at the first user device 100a.

The final email 300 comprises a message field 301 for holding email content, a collaborator field 302 for holding identifiers of collaborating users who collaborated on the final email 300 (during the collaboration phase discussed above), a To field 304 for holding identifiers of primary recipients of the final email 300, and a CC field 305 for holding identifiers of secondary recipients of the final email 300. The final email 300 may also comprise a From field 303 for holding an identifier of a sender of the final email 300. In the examples described herein, the first user A is the sender and is therefore indicated in the From field 303.

The fields 301-305 of the final email 300 are not to be confused with the draft fields 201-202 of the collaboration object 200. The draft fields 201-202 are editable by the users 100 during a collaboration stage in which the collaboration object 200 is passed between them. The fields 301-305 of the final email 300 itself, on the other hand, are "fixed" in the sense that they contain the "final" values as agreed upon by the users 100 during the collaboration stage.

The final email 300 is constructed or generated at the first user device 100a by populating the fields 301-304 of the final email 300. Constructing the final email 300 is done based at least in part on the draft fields 201-202 of the collaboration object 200. That is, the values from the fields 201-202 in the final version of the collaboration object 200 are used to populate the corresponding fields in the final email 300.

The message as present in the draft message field 201 of the final collaboration object 200 is used to populate the message field 301 of the final email 300.

As mentioned above, the From field 303 of the final email 300 is populated with an identifier of the first user A, as the first user A is the user who is sending the final email 300.

The collaborator field 302 of the final email 300 is populated based on the identifier(s) of the collaborator(s) as present in the draft collaborator field 202 of the final collaboration object 200. The first user A (who sends the final email 300 and is indicated in the From field 303) may or may not be included in the collaborator field 302 of the final email 300. For example, the first user A may be included in the collaborator field 302 (in addition to the From field 303 in this example) of the final email 300 if the first user A provided substantive input to the email content in the message field 201 during drafting. Alternatively or additionally, the first user A may provide user input explicitly specifying whether or not the first user A is to be included in the collaborator field 302 of the final email 300.

In the example shown in Figure 2a, which follows on from the collaboration phase discussed above with reference to Figures 1a and 1b, the final email 300 has M2 in the message field 301 and an identifier of user B in the collaborator field 302 (taken from the final collaboration object 200). The sender, first user A, is indicated in the From field 303.

The first user A may also populate the CC field 305 of the email 300 with one or more identifiers of secondary recipients, but this is optional. In this example, an identifier of a third user C has been entered into the CC field 305 of the final email 300.

The first user A also populates at least the To field 303 with one or more identifiers of primary recipients. In this example, an identifier of a fourth user D has been entered into the To field 304 of the final email 300.

Once the first user A has completed any or all of the fields of the final email 300 as described above, the first user A causes the final email 300 to be sent from the first user device 100a. In this example, the final email 300 is sent to all primary, secondary, and tertiary (described later) users via their respective email addresses. The final email 300 is also sent to all collaborators via their respective email addresses in this example.

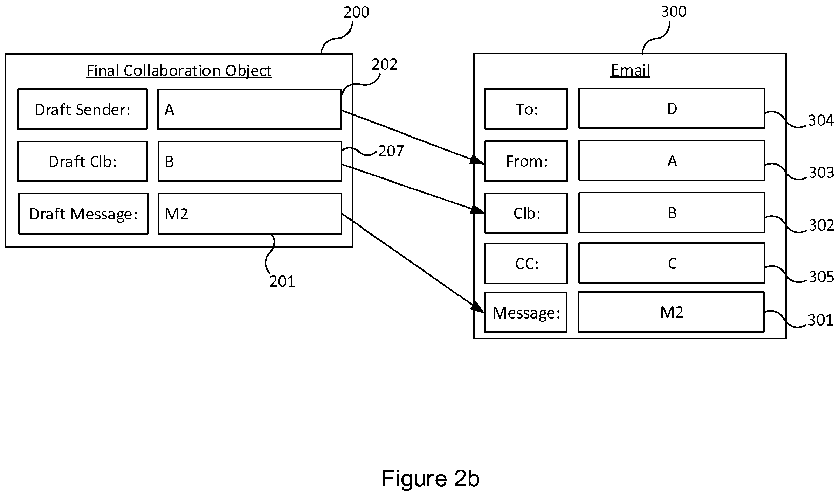

Figure 2b shows schematically another example in which the collaboration object 200 comprises a separate Sender field 207 for holding an identifier of the sender (the first user A in this example). In these cases, as illustrated in Figure 2b, constructing the final email 300 comprises: populating the From field 303 with the identifier of the first user A from the Draft Sender field of the collaboration object 200; and populating the collaborator field 302 of the final email 300 with all the collaborators as present in the draft collaborator field 202 of the final collaboration object 200.

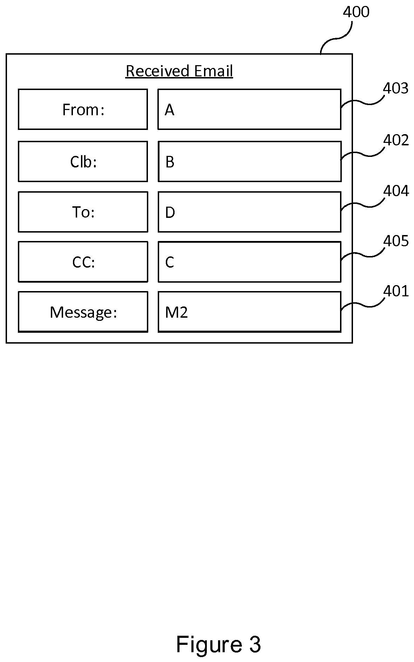

Figure 3 shows schematically an example displayed email 400 illustrating an example of how the final email 300 may be displayed to a recipient (e.g. one of the primary, secondary or tertiary recipients, or one of the collaborators).

Not all fields of the final email 300 need to be shown to the recipient in the displayed email 400. For example, any fields which are blank need not be displayed (e.g. the CC field 302 if this is blank).

In this example, the displayed email 400 comprises a message field 401, a collaborator field 402, a From field 403, a To field 404, and a CC field 405. Following on from the previous example, the first user A is indicated in the From field 403, the second user B is indicated in the collaborator field 402, the third user C is indicated in the CC field 405 and the fourth user D is indicated in the To field 404. The message M2 is shown in the message field 401.

One advantage of the technical process described above is that, because the users who actually collaborated on the message are automatically separated and presented in a dedicated field of the displayed email 400, the recipient (e.g. D) can easily and intuitively determine the roles each of the other users played in drafting of the email. For example, the fourth user D can immediately see from the identifiers in the fields of the received email 400 that the message M2 was collaborated on by the first user A and the second user B, and that the third user C is copied in on the email but did not collaborate on drafting the message M2 (e.g. C is only copied for docketing or informational purposes). This means that, for example, the fourth user D knows that he/she does not need to reply to any other user or otherwise enquire who worked on the message M2. Instead, the fourth user D can easily identify a relevant user to reply to with a follow-up email (e.g. the first user A or the second user B if the follow-up email relates to the content of the message M2 itself, or perhaps the third user C if the follow-up email relates to an administrative or bureaucratic issue).

In examples, the collaboration object 200 may comprise additional fields which the users 100 can edit during the collaboration phase (as described above). These additional fields are then also used during the email generation phase to complete the fields of the final email 300. Some examples are given below.

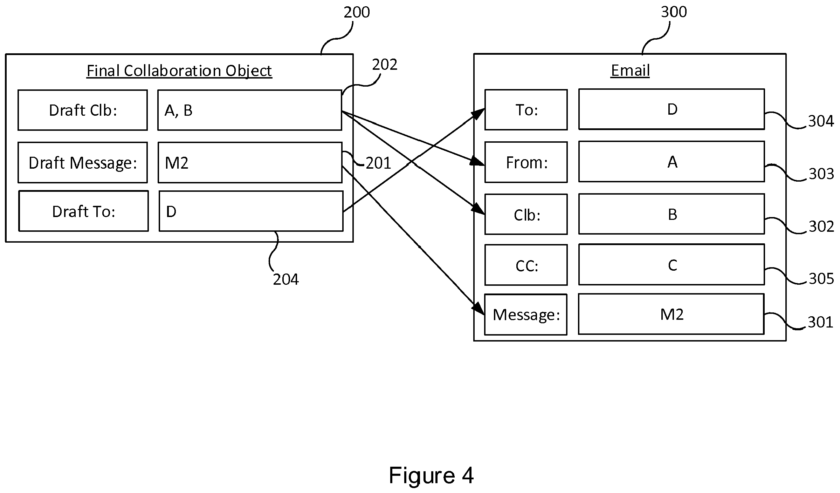

A first example is shown in Figure 4 in which the collaboration object 200 comprises a draft To field 204 for holding identifiers of primary recipients of the final email 300. As illustrated in Figure 4, generating the final email 300 in this case comprises populating the To field 304 of the final email 300 with primary recipients as present in the draft To field 204 of the final version of the collaboration object 300. It is appreciated that this is optional because the collaborators may simply know, or it may be implicit, to whom the email they are collaborating on will be sent. Therefore, the primary recipient(s) of the final email 300 do not need to be specified in the collaboration object 200.

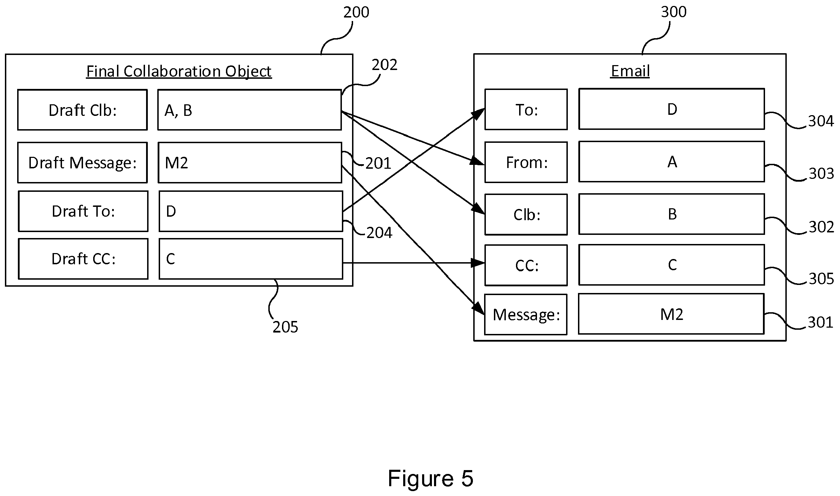

A second example is shown in Figure 5 in which the collaboration object 200 comprises a draft CC field 205 for holding identifiers of secondary recipients of the final email 300. As illustrated in Figure 5, generating the final email 300 in this case comprises populating the CC field 305 of the final email 300 with secondary recipients as present in the draft CC field 205 of the final version of the collaboration object 200.

In further examples, the collaboration object 200 may comprise draft fields for other elements of the email. Examples include an attachments field for holding attachments to the email, and a subject field for holding a subject or title of the email. Further examples in a meeting field for holding details of a meeting invite (e.g. the date, time, and optionally location of the meeting). In a similar manner to described above, fields in the final email 300 can be populated based on the respective values (or files) held in the corresponding fields of the final version of the collaboration object 200.

All of the examples given herein can be extended to allow more than two users to collaborate on an email 300. An example is given below involving three users, but it will also be appreciated that this readily extends to four or more users.

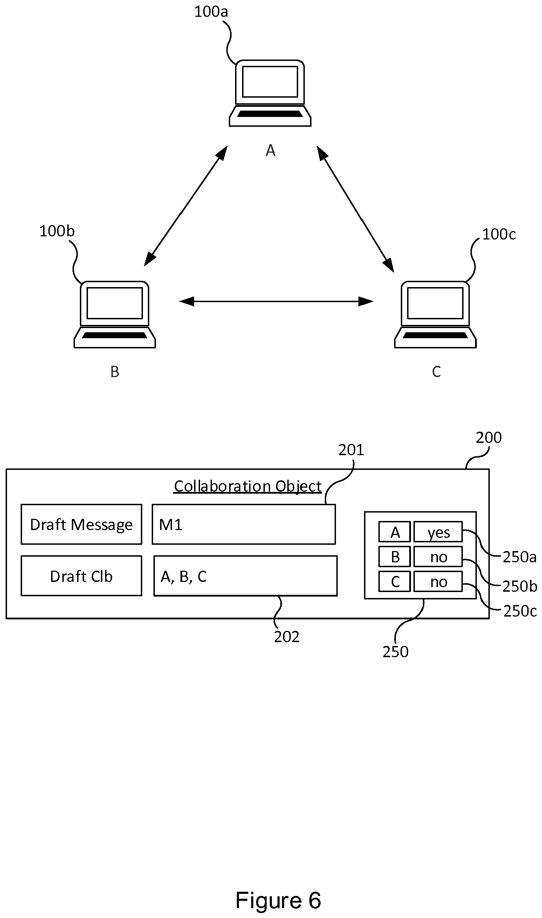

Figure 6 shows schematically an example in which a collaboration object 200 is used by three users A, B and C to collaborate on generation of a final email 300. Similarly to the method described above in relation to Figures 1a and 1b, the first user A operates a first user device 100a, a second user B operates a second user device 100b, and a third user C operates a third user device 100c. The second user B and third user C may be called "collaborating users" or simply "collaborators".

In this example, the collaboration object 200 comprises only a draft message field and a draft collaborators field (as in the example given earlier with reference to Figures 1a and 1b), but it will be appreciated that any of the additional fields described above may also be present.

The collaborators may add or remove one or more collaborators from the draft collaborators field 202 of the collaboration object 200. A collaborator may even remove themselves from the draft collaboration field 202, in which case they will no longer receive further versions of the collaboration object 200 or be included in the collaborator field 302 of the final email 300 when it is sent out.

In this example, the collaboration object 200 additionally comprises a set of approval flags 250. There is an approval flag for each collaborating user indicated in the draft collaborator field 202. Each approval flag indicates whether or not a given collaborator approves of the draft email as specified by the (current version of) the collaboration object 200. That is, an asserted approval flag for a given user means that that user approves of that version of the collaboration object 200. Here, a user "approves" of a collaboration object 200 if they consent to a final email 300 being generated based on that collaboration object 200 which will be sent out identifying them as a collaborator.

In this example, the collaboration object comprises three approval flags 250a-c: the first approval flag 250a indicates whether the first user A approves of the collaboration object 200; the second approval flag 250b indicates whether the second user B approves of the collaboration object 200; and the third approval flag 250c indicates whether the third user C approves of the collaboration object 200. Note that in some examples, there is no approval flag included for the first user A as this user is the user who sends the final email 300 and therefore implicitly approves of the final email 300 (given that the first user A decided to send the final email 300). The approval flags 250 may be implemented both in examples in which the collaboration object 200 is implemented centrally (e.g. at one or more servers) and in other examples in which the collaboration object 200 is sent (e.g. emailed) from one user device to another.

In examples in which the collaboration object 200 is passed around the collaborators (instead of being implemented centrally), a situation might arise in which more than one collaborator has made changes to the collaboration object 200, resulting in two (or more) different versions of the collaboration object 200. In such cases, each collaborator has the option to pursue either version of the collaboration object 200. The collaboration object 200 may comprise a timestamp indicating when that version was last edited in order to indicate to the collaborators which version is the most recent. In any case, the approval flags 250a-c present on each version of the collaboration object 200 will help the collaborators decide which version to pursue. Hence, in some examples, the state of the approval flags 250a-c is indicated to each collaborator via their user device 100a-c (e.g. visually on a display screen).

An example use case is as follows:
User A (the "Sender") initiates collaboration with a collaboration object 200 comprise a message "one". The collaboration object 200 is sent to user B and user C (the collaborators). User B modifies the message to "onetwo". User C, simultaneously (or at least before user B has sent his version of the collaboration object 200) modifies the message to "onethree". User B and user C each send their version of the collaboration object 200. User A therefore receives two versions of the collaboration object: one with message "onetwo" and one with message "onethree". User A then has a choice of which version of the collaboration object 200 he will pursue (e.g. use to generate a final email, further modify, send back to the collaborators, etc.) and which he will ignore. In any case, the approval flags 250 present on each version of the collaboration object 250 can help user A in this decision.

In some examples, the first user A cannot generate and send the final email 300 (as described above) until the approval flags 250 for all collaborating users are asserted.

In some examples, the approval flag 250 for a user may be asserted on a collaboration object 200 when that user has sent the collaboration object 200. This is because each user may be assumed to approve of the collaboration object 200 they have just sent out to the other collaborators (whether they made any changes or not).

In some examples, the approval flag 250 for a user may be asserted in response to explicit user input from that user via their user device 100 indicating that they approve of the collaboration object 200.

In some examples, the approval flag 250 for a user may be asserted following expiry of a predefined time period following the collaboration object 200 being sent to that user, if that user has not responded (e.g. by making changes to the collaboration object 200).

In some examples, any change to the collaboration object 200 by one of the users will revert the approval flag 250 for all other users to a non-asserted state (indicating that those users have not yet approved). The updated collaboration object 200 can then be sent around the users for each of the users until all the approval flags 250 are asserted (in any of the ways described above).

In some examples, there may be no approval flag 250 for the sending user or the user who initiated the collaboration object 200 (these may or may not be the same user).

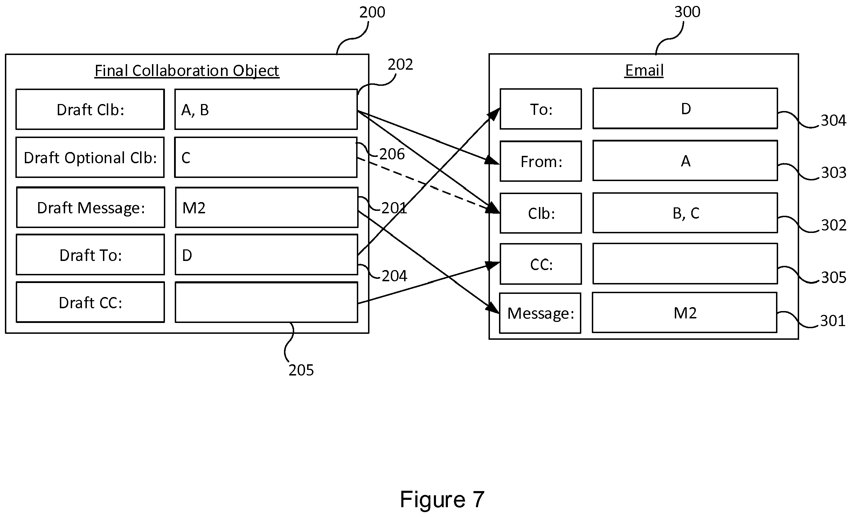

Following on from Figures 4 and 5, a third example is shown in Figure 7 in which the collaboration object 200 comprises a draft optional collaborator field 206 for holding identifiers of optional collaborators. The optional collaborators are similar to the (mandatory) collaborators in the draft collaborator field 202 in all respects except that the optional collaborators are not associated with an approval flag 250.

As illustrated in Figure 7, generating the final email 300 in this case comprises populating the collaborator field 302 of the final email 300 with optional collaborators as present in the draft optional collaborator field 206 of the final version of the collaboration object 200 in addition to the (non-optional) collaborators from the draft collaborator field 202 of the final version of the collaboration object 200. In some examples, an optional collaborator is only included in the collaborators field 302 of the final email 300 if they provided input during the collaboration phase. Here, "input" means any change or comment at all during the collaboration phase, whether or not that change of comment ended up being present in the final email 300 which is sent out. This may be done automatically during generation of the final email 300 by, for example, updating the collaboration object 200 to indicate a user as having provided input in response to that user providing input. Any optional collaborators which are associated with such an indication in the final version of the collaboration object 200 will be placed in the collaborators field 302 of the final email 300.

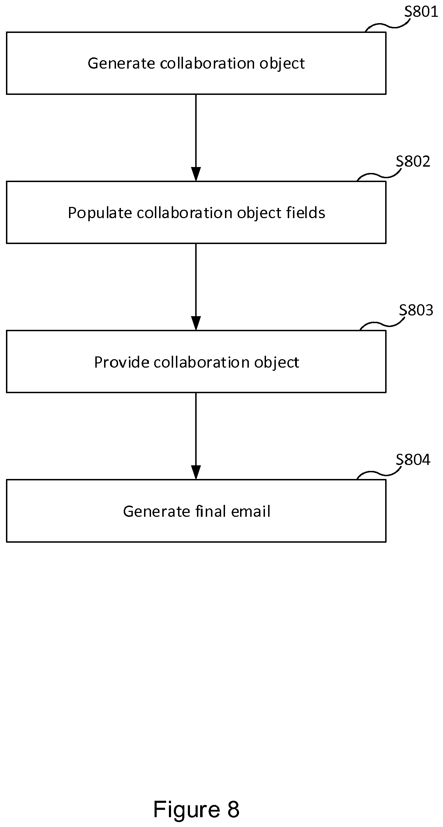

Figure 8 shows schematically an example method in accordance with an example described herein.

At S801, a collaboration object is generated. As described above, in an example, the collaboration object has a plurality of fields. In examples, the collaboration object comprises at least a draft collaborator field for holding identifiers of collaborating users and a draft message field for holding email content.

At S802, the fields of the collaboration object are populated in response to input from the first user, as described above. In examples, this comprises populating at least the draft collaborator field with an identifier of a second user;

At S803, the collaboration object is provided to enable the second user to make modifications to one or more of the fields of the collaboration object to generate a modified version of the collaboration object. As described above, this may comprise emailing the collaboration object to the second user (and potentially more users). Alternatively or additionally, this may comprise making the collaboration available on an electronic storage, e.g. on a server. In examples, an identifier of the electronic storage (e.g. an address such as a MAC address) may be provided to the second user (and potentially other users). The collaboration object, having been modified by one or more users (e.g. the second user) may be called a "modified collaboration object". The modified collaboration object may be made available to the users (e.g. the first user) in a similar manner to as described above (e.g. via email or by storage on a server).

At S804, the final email is generated. As described above, the final email is generated based on the modified version of the collaboration object. Hence, this may comprise accessing the modified version of the collaboration object from a server, or receiving the modified version of the collaboration object from a user (e.g. the second user). In an example, generating the final email comprises at least populating the collaborator field of the final email with an identifier of the second user and populating the message field of the final email with email content as present in the draft message field of the modified version of the collaboration object. Generating the final email may also comprise populating other fields of the final email with values as present in the modified version of the collaboration object, in the manner described above.

According to an aspect disclosed herein, there is provided a method performed at a user device of a first user to generate a final email. The final email may have a To field for holding identifiers of primary recipients of the final email, a CC field for holding identifiers of secondary recipients of the final email, a collaborator field for holding identifiers of collaborating users who collaborated to provide input during drafting of the final email, and a message field for holding email content. A collaboration object is generated. The collaboration object has a plurality of fields comprising at least a draft collaborator field for holding identifiers of collaborating users and a draft message field for holding email content. In response to input from the first user, at least the draft collaborator field is populated with an identifier of a second user. The collaboration object is provided to enable the second user to make modifications to one or more of the fields of the collaboration object to generate a modified version of the collaboration object. The final email is generated based on the modified version of the collaboration object by: populating the collaborator field of the final email with an identifier of the second user; and populating the message field of the final email with email content as present in the draft message field of the modified version of the collaboration object.

In an example, providing the collaboration object comprises emailing the collaboration object to a user device of the second user; and the modified version of the collaboration object may be received via email.

In an example, the modified version of the collaboration object is received following a collaboration stage in which the collaboration object is sent to at least two collaborating users.

The collaborating users may be called "mandatory" collaborating users to distinguish them from the optional collaborating users discussed below.

The modified version of the collaboration object may be received from the second user device. The modified version of the collaboration object may have had plural changes made to it by more than one user.

In an example, the collaboration object comprises a draft To field for holding identifiers of primary recipients of the final email; and generating the final email comprises populating the To field of the final email with primary recipients as present in the draft To field of the modified version of the collaboration object.

In an example, the collaboration object comprises a draft CC field for holding identifiers of secondary recipients of the final email; and generating the final email comprises populating the CC field of the final email with secondary recipients as present in the draft CC field of the modified version of the collaboration object.

In an example, the collaboration object comprises a draft optional collaborator field for holding identifiers of one or more optional collaborating users; the method comprises identifying which of the optional collaborators made at least one modification to the collaboration object; and generating the final email comprise populating the collaborators field of the final email with optional collaborators as present in the draft optional collaborators field of the modified version of the collaboration object who made at least one modification to the collaboration object.

In an example the method comprises sending the final email to: the primary recipients as indicated in the To field of the final email; any secondary recipients as indicated in the CC field of the final email; and the collaborating users as present in the collaborator field of the final email.

In an example, the final email is sent by the first user. In other examples, the final email is sent by a user other than the first user.

In an example, the collaboration object comprises a respective approval flag for each collaborating user indicated in the draft collaborator field, each approval flag being assertable to indicate that the respective collaborating user approves of the collaboration object.

In an example the method comprises sending the final email only when the approval flags for all of the collaborating users are asserted in the received modified version of the collaboration object.

In an example, the approval flag for a collaborating user is asserted in response to that collaborating user sending the collaboration object. That is, the act of the user sending the collaboration object is taken to mean that the user implicit approves of that version of the collaboration object.

In an example, the approval flag for a collaborating user is asserted in response to expiry of a predefined time limit following that collaborating user receiving the collaboration object.

In an example, the approval flag for a collaborating user is asserted in response to user input from that collaborating user. The user input may be explicit user input indicating that the user approves of the current version of the collaboration object.

In an example, modifications to the collaboration object made by a collaborating user are indicated visually in the collaboration object.

In an example, the final email is generated at a user device of the first user.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method performed at a user device (100a) to generate a final email (300), the method comprising:
generating a collaboration object (200) having a plurality of fields comprising at least a draft collaborator field (202) for holding identifiers of collaborating users and a draft message field (202) for holding email content;
in response to input from the first user (A), populating at least the draft collaborator field (202) with an identifier of a second user (B);
providing the collaboration object (200) to enable the second user (B) to make modifications to one or more of the fields of the collaboration object (200) to generate a modified version of the collaboration object (200); and
generating the final email (300) based on the modified version of the collaboration object (200) by:
populating a collaborator field (302) of the final email (300) with an identifier of the second user (B); and
populating a message field (301) of the final email (300) with email content as present in the draft message field (202) of the modified version of the collaboration object (200).

2. A method according claim 1, wherein providing the collaboration object (200) comprises emailing the collaboration object (200) to a user device (100b) of the second user (B); and wherein the modified version of the collaboration object (200) is received via email.

3. A method according to claim 2, wherein the modified version of the collaboration object (200) is received following a collaboration stage in which the collaboration object (200) is sent to at least two collaborating users (B, C).

4. A method according to any of claims 1 to 3, wherein:
the collaboration object (200) comprises a draft To field (204) for holding identifiers of primary recipients of the final email (300); and
generating the final email (300) comprises populating a To field (304) of the final email (300) with primary recipients as present in the draft To field (204) of the modified version of the collaboration object (200).

5. A method according to any of claims 1 to 4, wherein:
the collaboration object (200) comprises a draft CC field (205) for holding identifiers of secondary recipients of the final email (300); and
generating the final email (300) comprises populating a CC field (305) of the final email (300) with secondary recipients as present in the draft CC field (205) of the modified version of the collaboration object (200).

6. A method according to any of claims 1 to 5, wherein:
the collaboration object (200) comprises a draft optional collaborator field (206) for holding identifiers of one or more optional collaborating users;
the method comprises identifying which of the optional collaborators made at least one modification to the collaboration object (200); and
generating the final email (300) comprise populating the collaborators field (302) of the final email (300) with optional collaborators as present in the draft optional collaborators field (206) of the modified version of the collaboration object (200) who made at least one modification to the collaboration object (200).

7. A method according to any of claims 1 to 6, comprising sending the final email (300).

8. A method according to any of claims 1 to 7, wherein the collaboration object (200) comprises a respective approval flag (250) for each collaborating user indicated in the draft collaborator field (202), each approval flag (250) being assertable to indicate that the respective collaborating user approves of the collaboration object (200).

9. A method according to claim 8, comprising sending the final email (300) only when the approval flags (250) for all of the collaborating users are asserted in the received modified version of the collaboration object (200).

10. A method according to claim 8 or claim 9, wherein the approval flag (250) for a collaborating user is asserted in response to that collaborating user sending the collaboration object (200).

11. A method according to any of claims 8 to 10, wherein the approval flag (250) for a collaborating user is asserted in response to expiry of a predefined time limit following that collaborating user receiving the collaboration object (200).

12. A method according to any of claims 8 to 11, wherein the approval flag (250) for a collaborating user is asserted in response to user input from that collaborating user.

13. A method according to any of claims 1 to 12, wherein modifications to the collaboration object (200) made by a collaborating user are indicated visually in the collaboration object (200).

14. A computer program comprising instructions such that when the computer program is executed on one or more computing devices, the one or more computing devices are arranged to carry out a method of generating a final email (300), the method comprising:
generating a collaboration object (200) having a plurality of fields comprising at least a draft collaborator field (202) for holding identifiers of collaborating users and a draft message field (202) for holding email content;
in response to input from a first user (A), populating at least the draft collaborator field (202) with an identifier of a second user (B);
providing the collaboration object (200) to enable the second user (B) to make modifications to one or more of the fields of the collaboration object (200) to generate a modified version of the collaboration object (200); and
generating the final email (300) based on the modified version of the collaboration object (200) by:
populating a collaborator field (302) of the final email (300) with an identifier of the second user (B); and
populating a message field (301) of the final email (300) with email content as present in the draft message field (202) of the modified version of the collaboration object (200).

15. A user device (100a) comprising a processing system constructed and arranged to carry out a method of generating a final email (300), the method comprising:
generating a collaboration object (200) having a plurality of fields comprising at least a draft collaborator field (202) for holding identifiers of collaborating users and a draft message field (202) for holding email content;
in response to input from a first user (A), populating at least the draft collaborator field (202) with an identifier of a second user (B);
providing the collaboration object (200) to enable the second user (B) to make modifications to one or more of the fields of the collaboration object (200) to generate a modified version of the collaboration object (200); and
generating the final email (300) based on the modified version of the collaboration object (200) by:
populating a collaborator field (302) of the final email (300) with an identifier of the second user (B); and
populating a message field (301) of the final email (300) with email content as present in the draft message field (202) of the modified version of the collaboration object (200).
